# EUROPEAN PATENT APPLICATION

(11) **EP 3 514 860 A1**
(43) Date of publication of application: **24.07.2019**
(21) Application number: 17862700.6
(22) Date of filing: 12.10.2017
(51) Int. Cl.: H01M 4/13, H01M 4/04, H01M 4/80, H01M 4/62

(54) **METAL NON-WOVEN FABRIC ELECTRODE HAVING DOPAMINE-BASED MONOMER POLYMERIZED ON SURFACE THEREOF, AND SURFACE MODIFICATION METHOD THEREFOR**

(30) Priority: 18.10.2016 KR 20160134849
(71) Applicant: Jenax Inc., Busan 47301 (KR); Hanbat National University Industry-Academic Cooperation Foundation, Daejeon 34158 (KR)
(72) Inventor: KIM, Chang Hyeon, Gongju-si Chungcheongnam-do 32621 (KR); LEE, Yong Min, Daejeon 34177 (KR); RYOU, Myung Hyun, Daejeon 34138 (KR); SONG, Danoh, Seocheon-gun Chungcheongnam-do 33636 (KR); JO, Hea Rin, Nonsan-si Chungcheongnam-do 32919 (KR); OH, Jeong Hun, Cheonan-si Chungcheongnam-do 31133 (KR)
(74) Representative: Isarpatent
(86) International application number: PCT/KR2017/011236
(87) International publication number: WO 2018/074775

(57) **Abstract**

The metal non-woven fabric electrode having a surface-polymerized dopamine-based monomer and the surface modification method for the same according to the present invention have the effects that coating an aqueous slurry as well as a dopamine-based polymer layer even on a surface of the metal fiber inside the electrode.

## Description

### BACKGROUND OF THE INVENTION

### 1. Field

The present invention relates to a metal non-woven electrode having a surface-polymerized dopamine-based monomer and a surface modification method therefor.

### 2. Description of the Related Art

In recent years, lithium secondary batteries have been poured deep into our lives as they have expanded to include middle-sized to large-sized secondary batteries such as electric vehicles and large-capacity energy storage devices as well as small-sized electronic devices such as mobile phones and notebooks. Accordingly, in the past, if the development of a better secondary battery was aimed at simply improving the performance of the lithium secondary battery, a keen attention is now mainly focused on the process of manufacturing the lithium secondary battery.

In the initial manufacturing processes of a lithium secondary battery, an organic slurry using an organic solvent is used for preparing a slurry containing a cathode material or an anode material, resulting in environmental problems, cost problems, and deterioration of the work environment of the manufacturing workers. However, due to the importance of the manufacturing process, much research and development has been tremendously and continuously conducted to prepare aqueous slurries containing a cathode or an anode material using distilled water that is environmentally and economically more effective than an organic solvent. As a result, an aqueous slurry using styrene-butadiene rubber (SBR)/carboxymethyl cellulose(CMC) as a binder was commercialized at the present anode. As a result, nowadays, in case of the anode, a styrene-butadiene rubber(SBR)/carboxymethyl cellulose, CMC were commercialized.

However, the materials used in such secondary batteries have mostly hydrophobic properties, and coatings using aqueous electrode slurry have not yet been commercialized in the cathode-based electrode.

The registered Korean Patent KR 1190364B1 discloses a technique for increasing the hydrophilicity of an anode by coating an active material of anode with a dopamine-based monomer in an immersion manner. This technique is characterized in that since the conventional aging process for inducing the electrolyte wetting to the anode is not accompanied, the electrode and the secondary battery including the electrode can be manufactured within a shorter time.

On the other hand, in recent years, flexible small electronic devices have been spotlighted, and accordingly, flexible secondary batteries and electrodes have been eagerly demanded. One of the methods for realizing a flexible electrode is to use a metal non-woven fabric as a current collector by coating an electrode slurry on a metal non-woven fabric in which fibers are formed as a three-dimensional network structure. When a metal non-woven fabric is used, a conventional collector supports the electrode only at the bottom portion in a 2D manner. However, since the electrode slurry enters into the 3D network structure, the metal non-woven fabric supports the electrode in a 3D manner. Thereby, even under flexible environmental conditions, excellent electrochemical performance can be realized without deterioration of the electrode.

However, it is very difficult to coat the aqueous slurry to the surface of the metal non-woven fabric, particularly the metal fibers in the non-woven fabric. Specifically, the surface of the metal non-woven fabric is hydrophobic, and the inside of the metal non-woven fabric includes a metal fiber composed of a three-dimensional network structure and an air gap formed by the metal fiber. The aqueous slurry coating solution reaches the surface of the metal fiber in the metal non-woven fabric through the air gap, so that the aqueous slurry may be coated. However, due to the change of the surface energy due to the narrow air gap, a process for coating the aqueous slurry on the surface of the metal fiber in the metal non-woven fabric has substantially difficult limitations.

### SUMMARY OF THE INVENTION

It is an object of the present invention to provide a metal non-woven electrode in which an aqueous slurry can be coated even on the surface of metal fibers in a metal non-woven fabric for electrodes, and a surface modification method therefor.

The metal non-woven fabric electrode of the present invention is formed of a three-dimensional network structure and comprises at least more than one metal fibers which are surface-treated with a hydrophilic organic solvent; an air gap formed between the metal fibers; and a dopamine-based polymer layer coated on the surface of the metal fiber in contact with the air gap.

According to one embodiment of the present invention, an aqueous slurry layer coated on the dopamine-based polymer layer may be further included.

According to one embodiment of the present invention, the aqueous slurry layer may include an active material, a conductive material, and a binder.

A method for surface modification of a metal non-woven fabric electrode according to an embodiment of the present invention may include the steps of: (a) surface-treating a metal non-woven fabric for electrode with a hydrophilic organic solvent; and (b) surface-polymerizing the dopamine-based monomer to the metal non-woven fabric for electrode surface-treated with the organic solvent.

According to one embodiment of the present invention, the step (a) may include a step for immersing the metal non-woven fabric for electrodes in a hydrophilic organic solvent, and the step (b) may further include a step for mixing the dopamine-based monomer coating solution into the organic solvent in which the metal non-woven fabric for electrode is immersed.

According to one embodiment of the present invention, as for the mixing ratio of the organic solvent of the step (a) and the dopamine-based monomer coating solution of step (b), the dopamine-based monomer coating solution of 25-400 part by weight is used for 100 part by weight of the organic solvent.

According to one embodiment of the present invention, there are no problems when the metal fiber is a metal-based fiber. For example, the metal fiber may be a metal including at least more than one element selected from iron, copper, aluminum, magnesium, silver, gold, nickel, tin, palladium, platinum, zinc and indium, or a metal alloy.

According to one embodiment of the present invention, the organic solvent is not particularly limited, and may be, for example, alcohol.

According to one embodiment of the present invention, the surface modification method may further include a step for removing the surface-polymerized particles polymerized between the dopamine-based monomers after the step (b).

According to one embodiment of the present invention, the average thickness of the dopamine-based polymer layer formed by surface polymerizing the dopamine-based monomer on the surface of the metal fiber in the step (b) may be 0.001∼0.05 *µ*m.

According to one embodiment of the present invention, the surface modification method may further include: (c) a step for coating an aqueous slurry on the dopamine-based polymer layer formed on the surface of the metal fiber.

According to one embodiment of the present invention, the aqueous slurry of the step (c) may include an active material, a conductive material, and a binder.

The metal non-woven electrode of the present invention has an effect of coating an aqueous slurry even on the surface of the metal fibers in the metal non-woven fabric by performing a surface treatment of the hydrophilic organic solvent and the surface polymerization of the dopamine-based monomer.

Therefore, the metal non-woven fabric electrode of the present invention has the same performance as a general electrode of a flat plate, or better performance than that of the general electrode and has an additional property such as flexibility that is a characteristic of a metal non-woven fabric electrode.

It is to be understood that the effect described in the following specification, which is expected by the technical characteristics of the present invention, and its provisional effect are treated as described in the specification of the present invention even if the effect is not explicitly mentioned here.

### BRIEF DESCRIPTION OF THE DRAWINGS

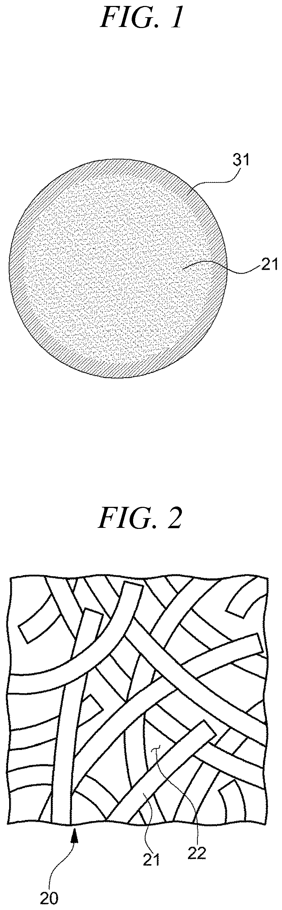

FIG. 1 is a cross-sectional view of a metal fiber strand formed with a dopamine layer of a metal non-woven electrode having surface-polymerized dopamine prepared according to Embodiment 1.
FIG. 2 is an enlarged view of a portion of a metal non-woven fabric electrode according to an exemplary embodiment of the present invention.

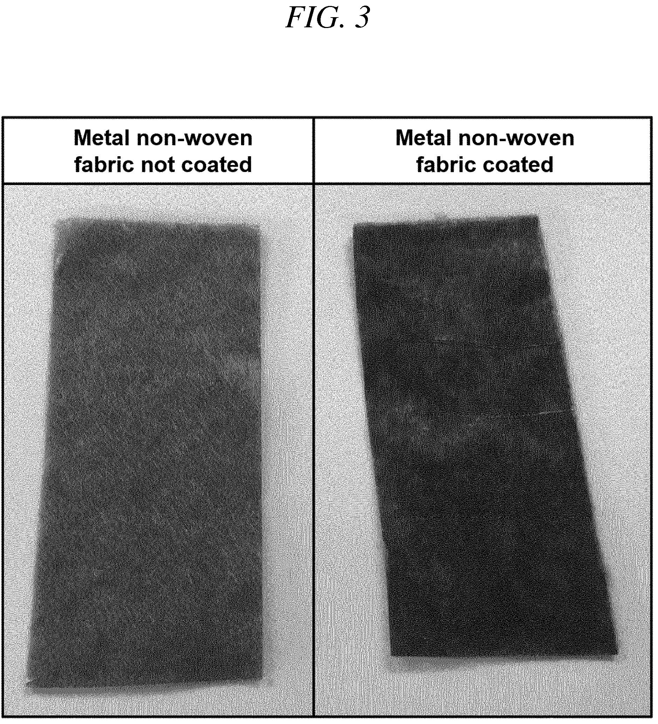

FIG. 3 is an image showing a metal non-woven fabric electrode having surface-polymerized dopamine prepared in Embodiment 1 and a metal non-woven fabric for an electrode to which no treatment is applied(a right image: non-woven fabric with surface-polymerized dopamine prepared in Embodiment 1, and a left image: a metal non-woven fabric for an electrode to which no treatment is applied).

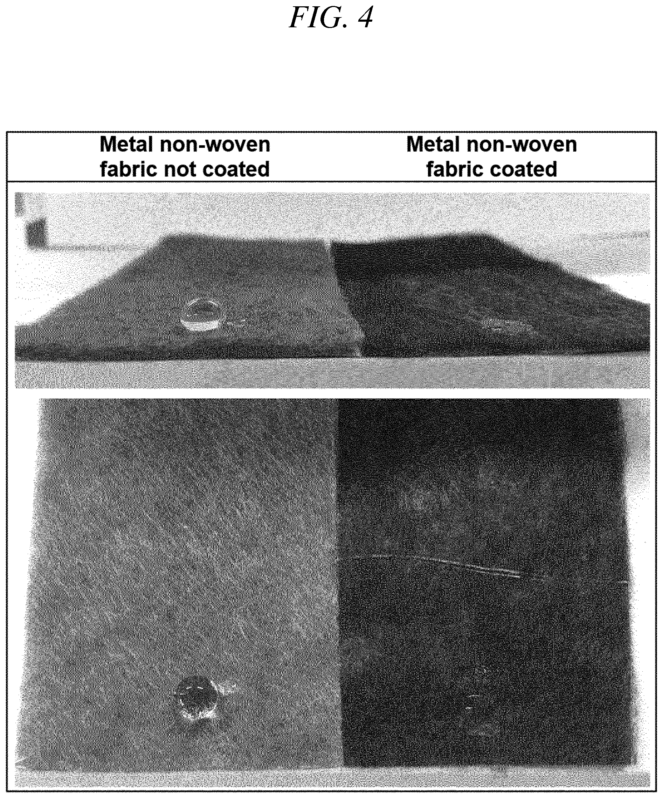

FIG. 4 is an image showing the side surface and the upper surface of an electrode when the distilled water was dropped on the surface of the metal non-woven fabric electrode having surface-polymerized dopamine prepared in Embodiment 1 and the surface of a metal non-woven fabric for an electrode to which no treatment is applied(a right image: a case of the metal non-woven electrode having the surface-polymerized dopamine prepared in Embodiment 1, and a left image: a case of the metal non-woven fabric for an electrode to which no treatment is applied).

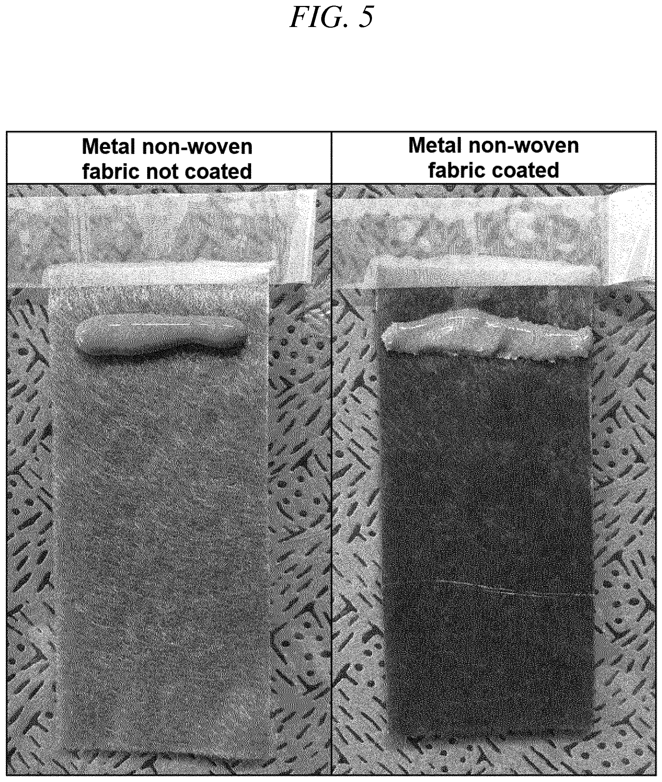

FIG. 5 is an image immediately after placing the aqueous slurry on the surface of the electrode or the electrode substrate in the process of coating the aqueous slurry on the surface of the metal non-woven electrode of Embodiment 2 and Comparative Example 2(a right image: a case of a metal non-woven fabric having surface-polymerized dopamine, and a left image: a case of a metal non-woven fabric for an electrode to which no treatment is applied).

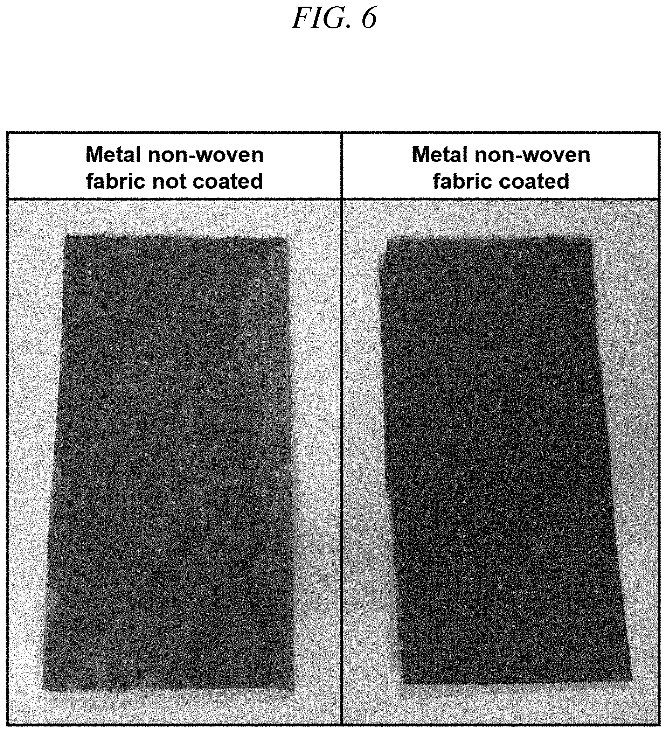

FIG. 6 is an image showing an electrode of a metal non-woven fabric coated with an aqueous slurry prepared in Embodiment 2 and Comparative Example 2(a right image: a case that an aqueous slurry was coated on the surface of an electrode of a metal non-woven fabric having surface-polymerized dopamine prepared in Embodiment 1, and a left image: the surface of the metal non-woven fabric for an electrode to which no treatment is applied is coated with the aqueous slurry).

### DETAILED DESCRIPTION OF THE INVENTION

The metal non-woven fabric electrode having the surface-polymerized dopamine-based monomer of the present invention and the surface modification method therefor will be described in detail with referring to the accompanying drawings.

The drawings described in the present invention are provided as an Embodiment so that the idea of the present invention may be sufficiently conveyed to a person skilled in the art. Therefore, the present invention is not limited to the illustrated drawings, but may be embodied in other forms, and the drawings may be exaggerated in order to clarify the spirit of the present invention.

In addition, unless otherwise defined, technological terminologies and scientific glossary used in the present invention have the meanings which the person having an ordinary skill in the technological field to which the present invention belongs can understand fully. In the following description and the accompanying drawings, descriptions of widely-known functions and configurations that may unnecessarily obscure the subject matter of the present invention will be omitted.

Further, unit of % unclearly used without mentioning in detail in the present invention means weight %.

The present invention relates to a metal non-woven electrode coated with a dopamine polymer and/or an aqueous slurry for coating a dopamine polymer and/or an aqueous slurry on the surface of a metal fiber in a metal non-woven fabric for electrode, and a surface modification method therefor.

The metal non-woven fabric electrode 20 of the present invention is formed of a three-dimensional network structure and comprises at least more than one metal fiber 21 surface-treated with a hydrophilic organic solvent; an air gap 22 formed between the metal fibers; and a dopamine-based polymer layer 31 coated on the surface of the metal fiber in contact with the air gap.

The metal non-woven electrode of the present invention may mean a fibrous conductive material comprising a metal fiber 21 and an air gap 22 formed by metal fibers, which is shown as an Embodiment in FIG. 1 and FIG. 2. The metal fiber 21 is defined as an object having a length L and a diameter D wherein the length L is greater than the diameter D and the diameter D is the diameter of the inner circle in which the cross-section of the metal fiber is in contact. The length and the diameter may be employed without problems as long as they correspond to the metal non-woven electrode used in this technological field, and for example, the average diameter may be 1∼50 *µ*m. In addition, the size of the air gap 22 is not particularly limited, and may be, for example, 0.01 to 1 mm.

That is, since the metal non-woven fabric electrode of the present invention is coated with the dopamine-based monomer to the surface of the metal fiber formed inside the electrode, there are the effects that the metal non-woven fabric electrode may have the same or superior electrode performance as a general electrode as a flat plate, and have also an additional property such as flexibility that is a characteristic of a metal non-woven fabric electrode.

The dopamine-based polymer layer is not limited as long as the dopamine-based monomer is formed by surface-polymerizing the dopamine-based monomer on the surface of the metal fiber and may include, for example, a polymer compound represented by the following Table 1.

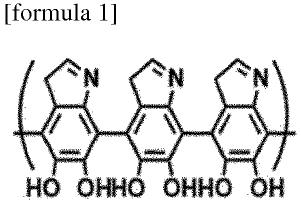

The dopamine-based monomer may include a compound having a catechol group or derivative thereof. As a specific Embodiment, the dopamine-based monomer may include a compound represented by the following formula (2). At this time, in the following formula (2), R₁₁ to R₁₂ are independently selected from hydrogen or C1 to C5 alkyl, respectively and at least one of them may be hydrogen, and may further include a substituent not shown in the following formula (2).

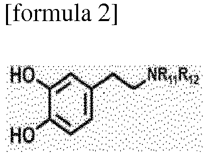

Further, the metal non-woven electrode of the present invention may comprise an aqueous slurry layer coated on the dopamine-based polymer layer. At this time, the aqueous slurry layer may include an active material, a conductive material, and a binder.

Therefore, the metal non-woven fabric electrode of the present invention is coated with the dopamine-based monomer and the aqueous slurry on the surface of the metal fiber formed in the electrode. As a result, there are excellent effects as follows. That is, it has the same electrode performance as a general electrode of a flat plate, or better electrode performance than that of the general electrode, and can have additional properties such as flexibility inherent to a metal non-woven fabric electrode. In addition, it is possible to further improve the electrode performance by the aqueous slurry layer.

The composition ratio of the aqueous slurry is not particularly limited and may be, for example, 60 to 90% by weight of the active material, 5 to 20% by weight of the conductive material, and 5 to 20% by weight of the binder based on the total weight of the aqueous slurry. The active material, the conductive material and the binder may be the materials which are used in this field.

In connection with a manufacturing method of the metal non-woven fabric electrode of the present invention, various kinds of methods may be employed, but as the most preferred method, a surface modification method of the metal non-woven fabric electrode described later may be enumerated.

The method for surface modification of the metal non-woven fabric electrode of the present invention comprises the steps of: (a) surface-treating a metal non-woven fabric for electrode with a hydrophilic organic solvent; and (b) surface-polymerizing the dopamine-based monomer to the metal non-woven fabric for electrode surface-treated with the organic solvent.

The "metal non-woven fabric for the electrode" means a fibrous conductive material comprising at least more than one metal fibers 21 formed of a three-dimensional network structure, and an air gap 22 formed between the metal fibers. A metal non-woven fabric used as an electrode, and the like may be exemplified.

"The outer surface of the electrode" or "the outer surface of the non-woven fabric" described later is a concept which is opposite to the surface of the metal fiber in an electrode or a non-woven fabric, and thus means a surface of the metal fiber corresponding to one surface of the non-woven fabric or the electrode exposed to the outside,

Also, the terminology, "surface-polymerization" referred to in the present specification means that a dopamine-based monomer self-polymerizes on the surface of a metal fiber.

Although it is not so difficult to form a hydrophilic coating layer on the outer surface of a general metal non-woven fabric for electrodes, it is terribly difficult to form a hydrophilic coating layer on the inner surface of the metal fiber. It has been widely known that this is due to the surface energy change due to the geometrical structure. Specifically, the surface energy of the outer surface of the non-woven fabric having one contacting metal surface is different from that of the surface of the metal fiber in the non-woven fabric having two or more contacting metal surfaces. Thus, each of these surfaces has a significant difference in terms of the accessibility of the hydrophilic material to form the hydrophilic coating layer. The air gap in contact with the surface of the metal fibers in the non-woven fabric are surrounded by two or more metal surfaces, so that the accessibility of the hydrophilic material through the air gap is relatively tremendously difficult as compared with the outer surface of the non-woven fabric. Therefore, it is practically impossible to directly coat a hydrophilic material such as a dopamine polymer coating solution or an aqueous slurry on the surface of the metal fiber in the non-woven fabric.

However, according to the present invention, when the metal fiber in the metal non-woven fabric is surface-treated with a hydrophilic organic solvent, the hydrophilic material may be stably and uniformly coated on the surface of the metal fiber in the non-woven fabric through the air gap, and the aqueous slurry may be stably and uniformly coated on the dopamine-based polymer layer.

That is, the surface modification method of the metal non-woven electrode of the present invention may comprise the steps of: (a) surface-treating a surface of a metal fiber in a metal non-woven fabric for electrodes with a hydrophilic organic solvent; and (b) surface-polymerizing the dopamine-based monomer on the surface of the metal fiber surface-treated with the organic solvent.

For example, the step (a) may include a step of immersing the metal non-woven fabric for electrodes in a hydrophilic organic solvent, and the step (b) may include a step of mixing the dopant-based monomer coating solution into the organic solvent in which the metal non-woven fabric for electrode is immersed. That is, after immersing the metal non-woven fabric for electrode in a hydrophilic organic solvent to induce organic solvent wetting on the surface of the metal fiber, the organic solvent and the dopamine-based monomer coating solution are mixed and the surface polymerization are performed proceeds at the same time while the organic solvent wettability is secured. Therefore, it is possible to effectively surface-polymerize the dopamine-based monomer to the surface of the metal fiber in the non-woven fabric.

The mixing ratio between the hydrophilic organic solvent in step (a) and the dopamine-based monomer coating solution in step (b) may be selected such that the dopamine-based polymer may be coated to the inside of the non-woven fabric. For example, 25 to 400 parts by weight, specifically 50 to 200 parts by weight, of the dopamine-based monomer coating solution per 100 parts by weight of the organic solvent may be employed. Further, the amount of the organic solvent may be used such that the organic solvent may be sufficiently wet on the metal fibers of the metal non-woven fabric for electrode.

The metal fiber of the metal non-woven fabric for electrode may be a conductive material that may be used as an electrode. As a specific Embodiment, the metal fiber may be a metal including at least more than any one selected from iron, copper, aluminum, magnesium, silver, gold, nickel, tin, palladium, platinum, zinc, indium and the like, or a metal alloy.

The hydrophilic organic solvent may be an organic solvent excellent in hydrophilicity such that the surface of the dopamine-based monomer may be polymerized to the surface of the metal fiber in the non-woven fabric. The hydrophilic organic solvent may include an organic compound having a hydrophilic group, and as the Embodiments of the hydrophilic group, a hydroxyl group, an amine group, and a carboxyl group may be enumerated. Specifically, the hydrophilic organic solvent may be preferably an alcohol or the like, and more specifically, a low quality alcohol having 5 or less carbon atoms may be exemplified. The alcohols include, for example, methanol, ethanol, propanol, butanol, pentanol, primary, secondary and tertiary alcohols thereof; and the most preferred one may be methanol.

The dopamine-based monomer coating solution in step (b) may include a dopamine-based monomer and a solvent. The concentration of the dopamine monomer coating solution may be arranged such that the monomer may be surface-polymerized to the metal fiber. For example, it is observed that 0.001 to 5% by weight of the dopamine-based monomer is employed for the total weight of the coating solution. The solvent is not particularly limited, and preferably may be an aqueous solvent such as water.

The dopamine-based monomer may include a compound having a catechol group or derivative thereof. In detail, the dopamine-based monomer may include a compound represented by the following formula (2). In the following formula (2), R₁₁ to R₁₂ are independently selected from hydrogen or C1 to C5 alkyl, respectively and at least one of them may be hydrogen, and may further include a substituent not shown in the following formula (2).

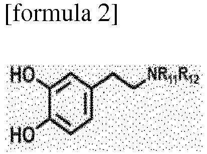

The dopamine-based monomer is autopolymerized with polydopamine within a specific pH range. These dopamine-based monomers may be autopolymerized in eco-friendly aqueous buffer solutions such as distilled water at a low coat. Therefore, a dopamine-based polymer layer may be formed on the metal fiber surface of the metal non-woven fabric for electrode. The autopolymerizable pH range may be in the range of, for example, 7 to 12, preferably 8 to 10.

As a specific Embodiment, the dopamine-based monomer may be dopamine, and dopamine may be polymerized by reaction such as the following formula 3 so as to form polydopamine.

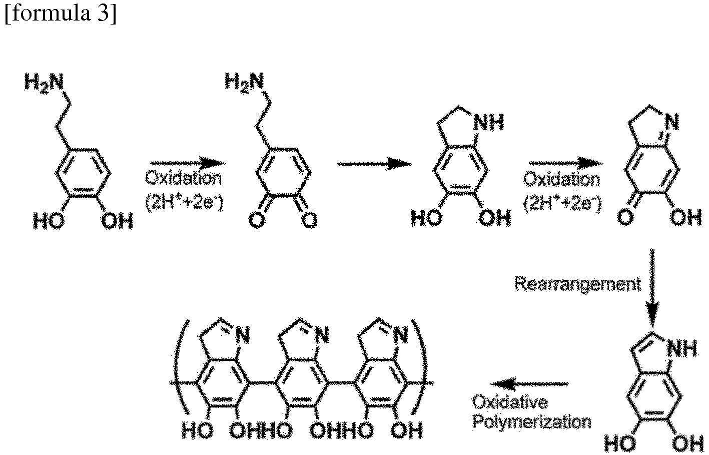

As described above, it is preferable that the dopamine-based monomer coating solution satisfies the pH at which self-polymerization of the dopamine-based monomer may be activated. Therefore, the coating solution may further include a pH adjusting agent, a buffer, and the like. When a pH adjusting agent or a buffer is additionally mixed, the content ratio thereof is not limited because it may be appropriately controlled so as to be adjusted and maintained at a required pH.

The pH adjusting agent is not limited as long as it may be adjusted to the required pH, and for example, it may include at least more than any one selected from the components such as lactic acid or a salt thereof, pyrrolidone carboxylic acid or a salt thereof, and an amino acid group(lysine, histidine, arginine, aspartic acid, threonine, serine, glutamic acid, prolin, glycine, alanine, valine, methionine, isoleucine, leucine, tyrosine, phenylalanine, halfcysteine, cysteine, asparagine, glutamine or tryptophan and the like).

The buffer is not limited as long as it corresponds to the required pH and may include any buffer such as TRIS buffer, CITRATE buffer, BIS-TRIS buffer, MOPS buffer, phosphate buffer PHOSPHATE buffer, CARBONATE buffer, HEPES buffer, TRICINE buffer, BICINE buffer or TAPS buffer and so on.

As described above, when the dopamine-based monomer satisfies the specific pH condition, it forms a polymer by self-polymerization on a solvent, so that surface-polymerized particles polymerized between dopamine-based monomers may be produced, in addition to the surface polymerization to the metal fiber. The surface-polymerized particles are polymerized once again or remain on the surface of the metal fiber, and as a result, it becomes difficult to form a uniform coating layer. In addition, the surface-polymerized particles act as resistors electrochemically as an insulating material, and thereby causing a problem of lowering the electrochemical reaction efficiency of the electrode.

The average size of the surface-polymerized particles which significantly degrade the electrochemical reaction efficiency may be 50 nm or more, specifically 50 to 600 nm. Accordingly, it is necessary to prevent surface-polymerized particle generation itself or to prevent the produced surface-polymerized particles from polymerizing once again or remaining on the surface of the metal fiber.

In order to solve the above problem, the surface modification method of the metal non-woven electrode of the present invention may further comprise a step for removing the surface-polymerized particles polymerized between the dopamine-based monomers after the step (b). Specifically, the step for removing the surface-polymerized particles may include a step for washing with methanol, water or the like after maintaining the polymerization for a certain period of time. At this time, the certain period of time may be adjusted depending on the conditions such as the concentration of the coating solution and the temperature, and may be preferably 3 to 25 hours, more preferably 5 to 20 hours, and most preferably 7 to 17 hours. The metal non-woven electrode having the surface-polymerized dopamine-based monomer is not easily peeled off during the cleaning process, and thus, surface-polymerized particles may be easily removed.

The average thickness of the dopamine-based polymer layer formed by surface-polymerizing the finally manufactured dopamine-based monomer on the surface of the metal fiber is not limited, and may be specifically 0.001∼0.05 *µ*m.

The method for modifying the surface of the metal non-woven electrode of the present invention may further include the step of (c) coating an aqueous slurry on the dopamine-based polymer layer formed on the surface of the metal fiber. If the dopamine-based polymer layer is not formed on the surface of the metal fiber which is formed while being in contact with an air gap formed in the metal non-woven fabric for electrode, a process for coating the aqueous slurry is not possible. That is, since the dopamine-based polymer layer may be formed up to the surface of the metal fiber in the non-woven fabric, an aqueous slurry layer may be formed and may also uniformly and stably be formed.

The aqueous slurry of step (c) may include an active material, a conductive material, and a binder. At this time, the composition ratio of the aqueous slurry is not limited, and may be, for example, 60 to 93% by weight of the active material, 5 to 20% by weight of the conductive material and 1 to 20% by weight of the binder based on the total weight of the aqueous slurry. The active material, the conductive material, and the binder may be those used in the related technological field, and the active material and the conductive material may be used in a particle state. In addition, the aqueous slurry may further contain a solvent such as distilled water depending on the case, and may further include 1 to 20% by weight of a solvent.

As a specific Embodiment, the conductive material may include more than any one selected from carbon black; acetylene black; ketchen black; furnace black; oil-furnace black; channel black; lamp black; summer Black; Columbia carbon; carbon fiber; graphene; graphite; and carbon-based conductive materials, and the like.

As a specific Embodiment, the active material may be a cathode active material in a particulate state or an anode active material in a particulate state.

The cathode active material may be used as long as it is a material capable of reversibly removing/inserting lithium ions, and may be an electrode material used for a cathode of a conventional lithium secondary battery. for example, the cathode active material may be an oxide of a layered structure typified by LiCoO₂, an oxide of a spinel structure typified by LiMn₂O₄, or a phosphate-based material of an olivine structure typified by LiFePO₄.

The lithium-metal oxide of the layered structure may include LiMO₂(M is more than two transition metals selected from the group consisting of Co and Ni); or LiMO₂ which is substituted with one or more than two heteroatoms selected from the group consisting of Mg, Al, Fe, Ni, Cr, Zr, Ce, Ti and Mn, or is coated with an oxide of such a heteroatom(M is one ore more than two transition metals selected from Co and Ni); LiₓNi_{α}Co_{β}M_{γ}O₂(a real number satisfying the condition, 0.9≤x≤1.1, a real number satisfying the condition, 0.7≤α≤0.9, a real number satisfying the condition, 0.05≤β≤0.35, a real number satisfying the condition, 0.01≤γ≤0.1, α + β + γ =1, M is more than one element selected from the group consisting of Mg, Sr, Ti, Zr, V, Nb, Ta, Mo, W, B, Al, Fe, Cr, Mn and Ce); or LiₓNiₐMn_{b}Co_{c}M_{d}O₂(a real number satisfying the condition, 0.9≤x≤1.1, a real number satisfying the condition, 0.3≤a≤0.6, a real number satisfying the condition, 0.3≤b≤0.4, a real number satisfying the condition, 0.1≤c≤0.4, a+b+c+d=1, M is more than one element selected from the group consisting of Mg, Sr, Ti, Zr, V, Nb, Ta, Mo, W, B, Al, Fe, Cr and Ce). The lithium-metal oxide of the spinel structure may be LiₐMn₂₋ₓMₓO₄(one element or more than two elements selected from M = Al, Co, Ni, Cr, Fe, Zn, Mg, B and Ti, or a real number satisfying the condition, 1≤a≤1.1, a real number satisfying the condition 0≤x≤0.2) or Li₄Mn₅O₁₂ and the like. The phosphate material of the olivine structure may include LiMPO₄(M is Fe, Co, Mn) or the like. Further, the cathode active material may be a single material or a composite of two or more materials (the first cathode active material and the second cathode active material). Such a composite may be a structure in which the first cathode active material and the second cathode active material are simply mixed; a core shell structure consisting of a core of the first cathode active material-a shell of the second cathode active material; a structure in which a second cathode active material is loaded or embedded in a matrix of the first cathode active material; a structure in which a second cathode active material is coated or embedded on a first cathode active material having a zero-dimensional and one-dimensional or two-dimensional nano-structures; or a laminated structure in which the first cathode active material and the second cathode active material are layered and laminated, respectively. However, it is needless to say that the present invention can not be limited by the specific material and the composite structure of the cathode active material

The anode active material may be any material conventionally used for an anode of a lithium secondary battery, and the anode active material may be a lithium intercalable material.

As a non-limiting Embodiment, the anode active material may include more than any one selected from the group consisting of lithium(metal lithium), soft carbon, hard carbon, graphite, silicon, Sn alloy, Si alloy, Sn oxide, Si oxide, Ti oxide, Ni oxide, FeO), lithium-titanium oxide (LiTiO₂, Li₄Ti₅O₁₂), and the like.

The binder does not chemically react with the electrolytic solution, and there are no problems if it may bind the active material or the conductive material. As a specific Embodiment, the binder may be selected from the group consisting of polyvinylidene fluoride, polyvinylidene fluoride-hexafluoropropylene copolymer, polyvinylidene fluoride-trichlorethylene copolymer, polymethylmethacrylate, polyacrylic, polyacrylic acid, polyacrylonitrile, polyvinylpyrrolidone, polyvinyl acetate, polyethylene-vinyl acetate copolymer, polyethylene oxide, cellulose acetate, cellulose acetate butyrate, cellulose acetate propionate, cyanoethylpullulan, cyanoethylpolyvinyl alcohol, cyanoethylcellulose, cyanoethyl sucrose, pullulan, carboxymethylcellulose, styrene-butadiene copolymer, acrylonitrile-styrene-butadiene copolymers, polyimides, polytetrafluoroethylene or mixtures thereof.

The metal non-woven fabric electrode of the present invention can be applied to various kinds of secondary batteries ranging from small electronic devices such as mobile phones and notebooks to middle-sized and large-sized secondary batteries such as electric vehicles and mass storage devices. Specifically, it may be applied to an anode material.

Hereinafter, the present invention will be described in detail with reference to the embodiments. However, these embodiments are enumerated for the purpose of illustrating the present invention more specifically, and the scope of the present invention is not limited by the following embodiments.

### [Embodiment 1]

First of all, a metal non-woven fabric for electrode made of Fe having an average particle diameter of a metal fabric of 5 *µ*m was prepared. The substrate was immersed in a container containing 100 mℓ of methanol for 10 minutes so that methanol may be sufficiently wetted on the fiber surface of the metal non-woven fabric for electrode.

Then, dopamine monomer was added to a buffer solution(10 mM tris buffer solution, pH 8.5) based on distilled water at 25°C, and stirred and dissolved for 30 seconds to prepare a dopamine coating solution so that the concentration of the dopamine monomer aqueous solution may become 2 mg/mℓ.

Immediately after the preparation of the dopamine coating solution, 250g of the dopamine coating solution was poured into a methanol 250g vessel in which the substrate is immersed, and the vessel was shaken to mix well, so that the formation of surface-polymerized particles by polymerization between the dopamine monomers in the dopamine coating solution may be minimized. At this time, the dopamine coating solution was polymerized at 25°C for 12 hours so as to surface-polymerize the surface of the metal fiber in the substrate where the methanol was wetted. Then, the metal non-woven fabric electrode on which dopamine was surface-polymerized was washed with distilled water so that the surface-polymerized particles did not remain on the surface of the non-woven fabric, thereby manufacturing a metal non-woven fabric electrode in which dopamine was surface-polymerized.

A surface contact angle test of water was carried out for the metal non-woven fabric electrode in which dopamine prepared in Embodiment 1 was surface-polymerized, and the surface of the metal non-woven fabric for electrode to which no treatments are applied. The result is shown in FIG. 4, and FIG. 4 is an image showing a side view and a top view when distilled water dropped on the surface of the metal non-woven fabric electrode on which dopamine prepared in Embodiment 1 was surface-polymerized; and the surface of the metal non-woven fabric for electrode to which no treatments are applied. At this time, a case of the metal non-woven fabric electrode on which dopamine prepared in Embodiment 1 was surface-polymerized is illustrated in a right image, and in the case of the metal non-woven fabric electrode, and a case of the metal non-woven fabric for electrode to which no treatments are applied is illustrated in a left image.

As shown in FIG. 4, when the distilled water was dropped on the surface of the metal non-woven fabric electrode having surface-polymerized dopamine prepared in Embodiment 1, the contact angle of the distilled water formed on the surface was very small, and it was confirmed that it was directly absorbed through the air gap between the metal fibers inside the electrode. On the other hand, when distilled water was dropped on the surface of the metal non-woven fabric for electrode to which no treatments are applied, the contact angle of the distilled water formed on the surface was very large, and even after a long time after the distilled water was dropped, it was confirmed that the absorption itself through the air gap between the metal fibers in the non-woven fabric was impossible.

### [Comparative Example 1]

Instead of the fact that the metal non-woven fabric for electrode was dampened with methanol in the Embodiment 1, Comparative Example 1 was carried out in the same manner as in Embodiment 1, except for a fact that a metal non-woven fabric for electrodes which is not wetted with methanol was used.

As a result, it was confirmed that in the case of Comparative Example 1, which was a metal non-woven electrode manufactured without wetting with methanol, the dopamine coating solution was coated only on the outer surface of the non-woven fabric without reaching the metal fibers in the non-woven fabric. It is judged that this phenomenon is attributed to the failure of the dopamine coating solution to reach the air gap formed between the metal fibers in the non-woven fabric.

### [Embodiment 2]

An aqueous slurry coating layer was formed on the surface of the metal non-woven fabric electrode in which the dopamine prepared in Embodiment 1 was surface-polymerized.

Specifically, an aqueous slurry containing 80 wt% of silicon powder, 10 wt% of carbon-based conductive particles (Carbon black, Super-P, TIMCAL) and 10 wt% of a binder (polyacrylic acid) was prepared. The aqueous slurry was coated on the surface of a metal non-woven fabric electrode having surface-polymerized dopamine prepared in Embodiment 1 by using a metal roll, and then dried at 80°C for 2 hours.

### [Comparative Example 2]

The same procedures as in Embodiment 2 was carried out except for the process for forming an aqueous slurry coating layer on the surface of a metal non-woven fabric for electrode which had not been treated instead of forming the aqueous slurry coating layer formed on the surface of the metal non-woven electrode having surface-polymerized dopamine.

FIG. 5 is an image immediately after placing the aqueous slurry on the electrode or the surface of non-woven fabric in the process of coating the aqueous slurry of Embodiment 2 and Comparative Example 2. At this time, a case that the aqueous slurry was coated on the surface of the metal non-woven fabric electrode having the surface-polymerized dopamine prepared in Embodiment 1 image was illustrated on the right image, and a case that the aqueous metal slurry was coated on the surface of the metal non-woven fabric for electrode which had not been treated was illustrated on the left image.

As can be seen from FIG. 5, in the case of Embodiment 2, it was confirmed that the aqueous slurry reached the air gap inside the metal non-woven fabric electrode and was absorbed on the surface of the metal fiber inside the electrode. On the other hand, when the aqueous slurry is arranged on the surface of the metal non-woven fabric for an electrode which has not been treated, it does not reach the air gap inside the non-woven fabric. Therefore, it was confirmed that it is not absorbed on the surface of the metal fiber inside the non-woven fabric, and thus, the non-woven fabric existed in the form of a lump on the outer surface of the non-woven fabric.

Therefore, in connection with the metal non-woven fabric electrode of the finally manufactured embodiment 2, it was confirmed that the aqueous slurry is absorbed and uniformly coated even up to the surface of the metal fiber inside the electrode as shown in FIG. 6. It is judged that hydrophilicity is increased since the dopamine polymer is coated on the surface of the metal fiber in the electrode. On the other hand, in the case of Comparative Example 2 in which an aqueous slurry was coated on the metal non-woven fabric for electrode in which dopamine was not surface-polymerized, it was confirmed that the aqueous slurry was not coated on the surface of the metal fiber in the non-woven fabric and the outer surface of the non-woven fabric was also unevenly coated.

### [Comparative Example 3]

Instead of forming the aqueous slurry coating layer on the surface of the metal non-woven electrode having a surface-polymerized dopamine in Embodiment 2, except for a process for forming an aqueous slurry coating layer on the surface of the metal non-woven electrode in which the dopamine of Comparative Example 1 was surface-polymerized, Comparative Example 3 was performed by using the same procedures as those of Embodiment 2.

As a result, as in the case of Comparative Example 2, it was confirmed that the aqueous slurry was not absorbed to the surface of the metal fiber in the non-woven fabric, and thus, a coating process was not performed. This is attributed to the fact that the dopamine-based polymer was not absorbed to the surface of the metal fiber in the non-woven fabric and thus, the surface was not coated, which is considered as being based on the same reason as explained in Comparative Example 1 and Comparative Example 2.

### [Explanation of Reference Numerals]

20: Metal non-woven fabric electrode or metal non-woven fabric for electrode
21: Metal fiber
22: air gap formed between metal fiber
31: dopamine-based polymer layer

## Claims

1. A metal non-woven fabric electrode, **characterized in that** it is formed by a three-dimensional network structure, and
comprising:
at least more than one metal fiber which are surface-treated with a hydrophilic organic solvent;
an air gap formed between the metal fiber; and
a dopamine-based polymer layer coated on a surface of the metal fiber in contact with the air gap.

2. The metal non-woven fabric electrode of the claim 1, further comprising an aqueous slurry layer coated on the dopamine-based polymer layer.

3. The metal non-woven fabric electrode of the claim 2, wherein the aqueous slurry layer includes an active material, a conductive material, and a binder.

4. A surface modification method of a metal non-woven fabric electrode comprising:
(a) surface-treating a metal non-woven fabric for electrode with a hydrophilic organic solvent; and
(b) surface-polymerizing the dopamine-based monomer to the metal non-woven fabric for electrode surface-treated with the organic solvent.

5. The surface modification method of a metal non-woven fabric electrode of the claim 4, comprising;
(a) surface-treating a surface of the metal fiber in the metal non-woven fabric for electrode with a hydrophilic organic solvent; and
(b) surface-polymerizing a dopamine-based monomer on the surface of the metal fiber surface-treated with the organic solvent.

6. The surface modification method of a metal non-woven fabric electrode of the claim 5, wherein the step (a) includes a step for immersing the metal non-woven fabric for electrode in a hydrophilic organic solvent, and
the step (b) includes a step for mixing a dopamine-based monomer coating solution into the organic solvent in which the metal non-woven fabric for electrode is immersed.

7. The surface modification method of a metal non-woven fabric electrode of the claim 6, wherein in connection with a mixing ratio of the organic solvent of the step (a) and the dopamine-based monomer coating solution of step (b), the dopamine-based monomer coating solution of 25-400 part by weight is used for 100 part by weight of the organic solvent.

8. The surface modification method of a metal non-woven fabric electrode of the claim 4, wherein the metal fiber is a metal including at least more than one elements selected from iron, copper, aluminum, magnesium, silver, gold, nickel, tin, palladium, platinum, zinc and indium, or a metal alloy.

9. The surface modification method of a metal non-woven fabric electrode of the claim 4, wherein the organic solvent is alcohol.

10. The surface modification method of a metal non-woven fabric electrode of the claim 4, further comprising a step for removing the surface-polymerized particles polymerized between the dopamine-based monomers after the step (b).

11. The surface modification method of a metal non-woven fabric electrode of the claim 4, wherein an average thickness of the dopamine-based polymer layer formed by surface polymerizing the dopamine-based monomer on the surface of the metal fiber in the step (b) is 0.001-0.05 *µ*m.

12. The surface modification method of a metal non-woven fabric electrode of the claim 4, further comprising a step (c) for coating an aqueous slurry on the dopamine-based polymer layer formed on the surface of the metal fiber.

13. The surface modification method of a metal non-woven fabric electrode of the claim 4, wherein the step (c) includes an active material, a conductive material, and a binder.
